# EUROPEAN PATENT APPLICATION

(11) **EP 1 345 365 A2**
(43) Date of publication of application: **17.09.2003**
(21) Application number: 03005843.2
(22) Date of filing: 14.03.2003
(51) Int. Cl.: H04L 12/56

(54) **Weighted fair queuing (WFQ) shaper**

(30) Priority: 15.03.2002 US 364037 P; 27.01.2003 US 351520
(71) Applicant: Broadcom Corporation, Irvine, California 92618-7013 (US)
(72) Inventor: Shankar, Laxman, San Jose, California 95117 (US); Ambe, Shekhar, San Jose, California 95117 (US)
(74) Representative: Jehle, Volker Armin, Dipl.-Ing.

(57) **Abstract**

A network device includes a port, a buffer, a flow control module, and a service differentiation module. The port is configured to send and receive a packet and the port is connected to a network entity. The buffer is configured to store the packet, and the flow control module is configured to control the transmission of the packet within the network device. The service differentiation module is coupled to the buffer and the flow control module. The service differentiation module is configured to regulate the storage of the packet in the buffer and to regulate the transmission of the packet from the network device to the network entity. The service differentiation module is also configured to regulate the transmission of the packet based upon whether a size of the packet satisfies operating parameters defined by the network device and the network entity.

## Description

### REFERENCE TO RELATED APPLICATION

This application claims priority of United States Provisional Patent Application Serial No. 60/364,037, which was filed on March 15, 2002. The subject matter of the earlier filed application is hereby incorporated by reference.

### BACKGROUND OF THE INVENTION:

### Field of the Invention:

This invention relates to systems and methods for flow control within a digital communications network. In particular, this invention is related to systems and methods for performing service differentiation regarding the treatment of packets within a network device.

### Description of the Related Art:

Over the last several years, the Internet has grown into an enormous network to which virtually any large or small computer network may be connected. Thus, the unprecedented growth of Internet users has placed even greater demands on the current Internet infrastructure, especially resources of a network that are shared by multiple network devices. For example, switches, routers and hubs are resources that are shared among a network to assist in transferring packets from one network device to another network device. Unfortunately, the buffer memory and the bandwidth of these shared devices have a limited amount of resources that must be allocated among these competing network devices. Thus, in order to prevent starvation of any particular network device, a network typically provides a service differentiation priority scheme such as class of service (CoS) to allocate these shared resources among the competing network devices.

Competition for these shared resources may occur at both the input ports and the output ports of a network device. Competition for entry into the network device may occur at the input ports due to congestion. Namely, when packets are transmitted to a receiver, the receiver might not be able to process the incoming packets at the same speed as the sender transmits the packets. Therefore, the receiver may need to store the incoming packets in a buffer to temporarily hold the packets until the packets can be processed. However, since buffers are created to hold a finite amount of data, a buffer overflow may occur when the packets entering the buffer exceeds the buffer's capacity. To prevent a buffer overflow from occurring, a buffer manager may decide to drop the last few packets of the incoming packets. The buffer manager must also make a service differentiation to determine which class or queue a packet should be dropped from when there is no available buffer space. To avoid congestion wherever possible a network may use conventional algorithms such as Random Early Detection (RED) or Early Random Drop (ERD) to drop the packets from the incoming queues, in proportion to the bandwidth which is being used by each network device.

At the output ports, competition over the bandwidth may also occur. Having enough bandwidth for packet transmissions has been a problem that has plagued many conventional network systems. If the traffic flow of the outgoing packets exceeds the available rate, the packets are typically dropped by the network, which adversely affects a network's quality of service (QoS). QoS is usually associated with a network being able to deliver time-sensitive information such as live video and voice while still having enough bandwidth to deliver other traffic. Prioritization, which is also referred to as class of service (CoS) or service differentiation, is a technique employed by some networks to tag traffic according to different classifications so that the traffic having a higher priority is delivered before lower-priority traffic.

One service differentiation scheduling mechanism that has been used to allocate the available bandwidth is Weighted Fair Queuing (WFQ) in conjunction with a "leaky bucket" to control the data flow between a network device, the Internet and World Wide Web (WWW) and another device. The leaky bucket method involves configuring a network device to restrict the amount of information (i.e., packets) that a user may receive (e.g., via a port of the network device), by tokenizing the information and setting a threshold.

Thus, the network device must determine whether there are enough credits in the token bucket for a packet to be sent or whether that packet must be delayed. To ensure that the network device uses the WFQ shaper to transmit packets according to the bandwidth policy established in the service level agreement (SLA), the network may establish specified rate parameters for receiving and transmitting the packets. The manner in which these parameters are established and controlled directly influences the network's ability to monitor, manage and control traffic flow having multiple classes of services.

Accordingly, new and improved systems and methods for establishing the operating parameters that govern the service differentiation applied to multiple CoS as packets are transmitted by a network device are needed.

### SUMMARY OF THE INVENTION:

According to an embodiment of the invention, provided is a network device. The network device includes a port, a buffer, a flow control module, and a service differentiation module. The port is configured to send and receive a packet and the port is connected to a network entity. The buffer is configured to store the packet, and the flow control module is configured to control the transmission of the packet within the network device. The service differentiation module is coupled to the buffer and the flow control module. The service differentiation module is configured to regulate the storage of the packet in the buffer and to regulate the transmission of the packet from the network device to the network entity. The service differentiation module is also configured to regulate the transmission of the packet based upon whether a size of the packet satisfies operating parameters defined by the network device and the network entity.

According to another embodiment of the invention, provided is a method of flow control in a network device. The method includes the steps of providing a port configuration to receive and transfer a packet and determining a classification of the packet. The method also includes the step of determining operating parameters for transmitting the packet from the network device based upon the classification. The method further includes the step of providing a first shaper and a second shaper for regulating a traffic flow. The second shaper imposes a threshold limit on the first shaper, and the threshold limit regulates the first shaper. The method also includes the step of scheduling the packet for transmission from the port to a network entity.

According to another embodiment of the invention, provided is a network device. The network device includes a port, a storage means, a flow control means and a service differentiation means. The port is configured to send and receive a packet, and the port is connected to a network entity. The storage means is for storing the packet, and the flow control means is for controlling the transmission of the packet within the network device. The service differentiation means is coupled to the storage and the flow control means. The service differentiation means is for regulating storage of the packet in the storage means and for regulating the transmission of the packet from the network device to the network entity. The service differentiation means is also configured to regulate the transmission of the packet based upon whether a size of the packet satisfies operating parameters defined by the network device and the network entity.

### BRIEF DESCRIPTION OF THE DRAWINGS:

The objects and features of the invention will be more readily understood with reference to the following description and the attached drawings, wherein:
FIG. 1 is a block diagram of a partial network;
FIG. 2 is a block diagram of a network device according to an embodiment of the invention;
FIG. 3 is a block diagram of a partial network;
FIG. 4 is a block diagram of a shaper according to an embodiment of the invention;
FIG. 5 depicts shaping of traffic flow exiting a network device according to an embodiment of the invention;
FIG. 6 is an illustration of WFQ performed according to an embodiment of the invention; and
FIG 7 is a flowchart of a method for service differentiation of multiple CoS according to an embodiment of the invention.

### DETAILED DESCRIPTION OF THE PREFERRED EMBODIMENTS:

The invention provides a system and method for a class-based selected transmission of packets. The invention employs a two-stage egress scheduler to implement differentiated services in order to provide different levels of services to different network users. More specifically, packets or other datagrams, which are positioned in a queue of an egress port of a network device, may be scheduled for transmission so that the egress traffic flow is controlled and shaped by a two-stage shaper according to selected parameters which govern the transfer rate of the packets.

For the purposes of the following discussion, the terms packet, data packet, cell, traffic, and frame may be used interchangeably. According to a preferred embodiment of the invention, the network device may be an Ethernet switch, and accordingly, a packet may refer to an Ethernet frame as defined by IEEE 802.x and as modified herein. Other devices and packets may also be within the scope of the invention.

Before network traffic (packets) can receive differentiated treatment, the traffic may be first classified and "marked" in a way that indicates that specific packets warrant different treatment than other packets. Typically, such different treatment can refer to priority of handling. In the Ethernet switch environment, packets may be prioritized, for example, by a priority tag. An Ethernet data packet can typically include a preamble, destination address (DA), source address (SA), tag control information, VLAN, MAC type, and data fields. The tag control information may include a 3-bit priority field, a 1-bit canonical formation indicator (CFI), and a 12-bit VLAN tag or VLAN ID. The invention may be configured to classify and switch packets based on the Type-of-service (ToS) field of the IP header. In a network transmission, a header precedes the data or control signals and describes something about the file or transmission unit, such as its length and whether there are other files or transmission units logically or physically associated with this file or transmission unit. A network operator may define a plurality of classes of service using the bits in the ToS field in the IP header or priority bits in the Ethernet header. The network device may also utilize other Quality-of-service (QoS) features to assign appropriate traffic-handling policies, including congestion management, bandwidth allocation, and delay bounds for each traffic class.

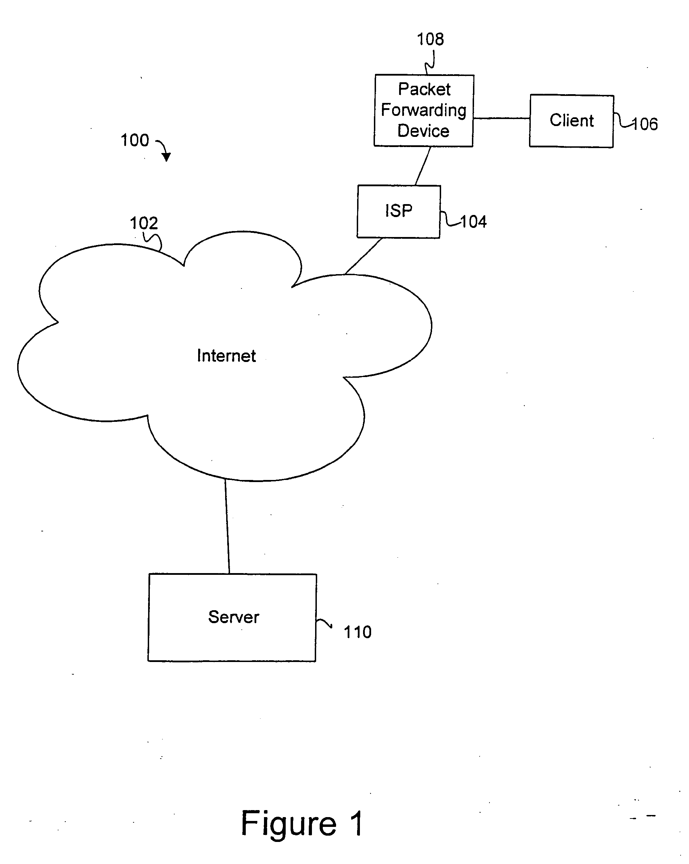

Fig. 1 is a block diagram of a network including a network device supporting service differentiation rate control in accordance with an embodiment of the invention. Fig. 1 shows a network 100 which may include the Internet and World Wide Web 102. An ISP 104 (shown as a single device, but may include a network of computers connected to the Internet 102 and may provide Internet service to a client 106 via an Ethernet link. Client 106 may be connected to a packet forwarding device 108 configured and/or controlled by ISP 104. Internet content is provided to client 106 via packet forwarding device 108.

In a typical configuration, ISP 104 may provide a designated amount of bandwidth to client 106 according to a service level agreement (SLA). This bandwidth may be regulated at packet forwarding device 108 via built-in rate control. One standard method of rate control is the "leaky bucket" method. According to the "leaky bucket" method, client 106 may connect to a content server 110 and download some content. Packet forwarding device 108 assigns a number of tokens to each data packet frame destined for client 106 (i.e., to the port connected to the client). The bandwidth is regulated in terms of the number of tokens client 106 is allowed to receive over a period of time, and the number of tokens may correspond to the size or the length of the packet. When client 106 meets its token threshold, the rest of the packets routed to client 106 are dropped by a conventional packet forwarding device. In this manner, the bandwidth of client 106 is regulated by packet forwarding device 108. However, to cure the deficiencies in the prior art, the system and method of rate control is modified as described below.

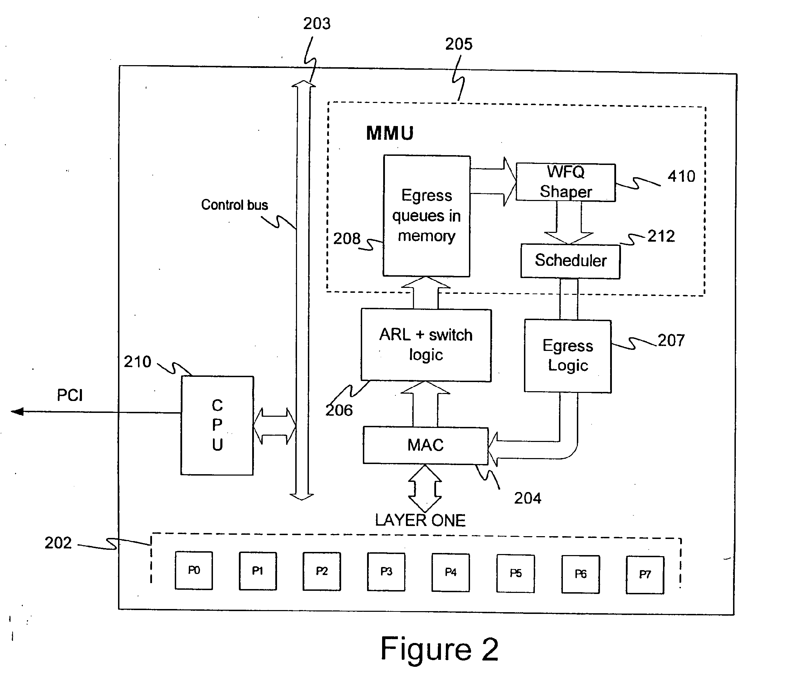

FIG. 2 is a block diagram of an exemplary network device according to an embodiment of the invention. Network device 200 may be, but is not limited to, a network switch, such as packet forwarding device 108, for example, and may be used within a network to control the flow of data communications to a user. Network device 200 may include a number of network ports 202 (e.g., P0-P7), which may be well known PHYs or transceivers and perform Ethernet layer one functions. Network ports 202 are connected to network devices on one end, such as client 106, and to MAC 204 internally. MAC 204 represents an Ethernet layer two system, which interfaces the layer one systems with the upper layers of the device. MAC 204 may perform standard layer two functions in addition to those described herein.

Network device 200 may also include a CPU 210 which may perform certain network functions, and which may communicate with, configure and control other systems and subsystems of network device 200. The network device may include a control bus, which carries information between CPU 210 and other devices within network device 200. Also, network device 200 may include Address Resolution Logic (ARL) 206 for performing networking functions, such as rate control, fast filter processing (FFP) congestion control, routing, learning, etc. Accordingly, ARL 206 is connected to and may communicate with MAC 204, CPU 210 and egress queues in the memory devices 208. ARL may also be configured to pre-read ("snoop") network ports 202 in order to perform in order to support rate control according to the invention.

A memory management unit (MMU) 205, which manages the memory systems of the device, may be included within network device 200. MMU 205 may include the egress queues in the memory devices 208, a WFQ shaper 410 and a scheduler 212. MMU 205 may also serve as a queue manager and a flow control module to control the transmission of the packets within network device 200. Network device 200 may include memory devices (not shown), which may connect to the egress queues in the memory devices 208. The memory devices (not shown) may be any number of registers, SRAM, DRAM or other memory as necessary to perform networking functions. The memory devices (not shown) may be a component of MMU 205 or may be a separate component. The egress queues in the memory devices 208 may provide a transmission rate for the packets leaving the memory devices (not shown) and entering WFQ shaper 410. Scheduler 212 may schedule the packets for transmission as the egress traffic is shaped by WFQ shaper 410. An egress logic 207 may retrieve the packets which are queued in an egress buffer and transfer the packets from MMU 205 to MAC 204.

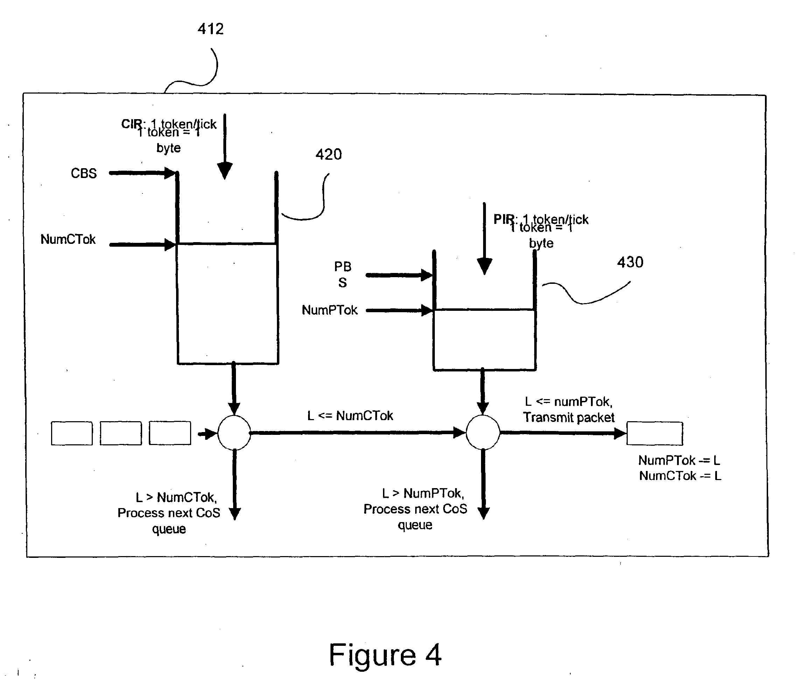

WFQ shaper 410 shapes the traffic flow of the packets as they are being transmitted from network ports 202. As shown in FIG. 4, the WFQ shaper may be a two-stage shaper 410 that enables network device 200 to control the traffic going out to an interface to network 100 to match the traffic flow to the speed of the destination network device and to ensure that the traffic conforms to the terms of any applicable SLA. Thus, traffic may be shaped to meet downstream requirements and to eliminate bottlenecks in topologies with data-rate mismatches.

The QoS of a network may depend upon the devices connected to the network complying with the terms of their respective SLAs. For instance, congestion caused by one network device may adversely affect the QoS levels for other devices connected to the network. Thus, the invention may employ the WFQ shaper as a shaping mechanism which monitors and controls traffic flow to ensure that each network device complies with their respective SLAs. Shaping may be used at the egress ports to control the transmission of the packets out of network device 200.

Network device 200 also may include a number of interfaces for directly controlling the device. These interfaces may provide for remote access (e.g., via a network) or local access (e.g., via a panel or keyboard). Accordingly, network device 200 may include external interface ports, such as a USB or serial port, for connecting to external devices, or CPU 210 may be communicated with via network ports 202. In this example, one such interface, a peripheral component interconnect (PCI) 209, is shown connected to network device 200 via the CPU 210.

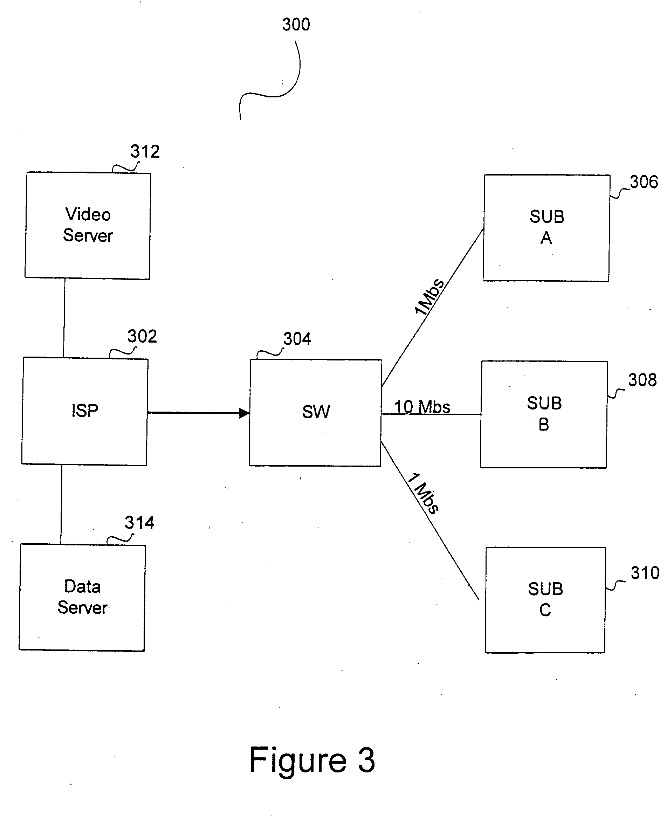

FIG. 3 shows another block diagram of a network according to one embodiment of the invention. Network 300 includes a plurality of subscribers 306-310 each connected to a switch 304. In this embodiment, the packet forwarding device 108 is shown as switch 304. Switch 304 may be connected to the Internet via an ISP 302. ISP 302 may be connected to a number of servers via the Internet or another network, such as to a video server 312 and data server 314. In this embodiment, it is shown that subscribers 306 and 310 each are restricted to data at a rate of 1Mbps Subscriber 308 is allocated data at a rate of 10Mbps. Accordingly, subscriber 308 would be allowed 10 times as many tokens as subscribers 306 and 310 in the case when rate control is performed via the leaky bucket method. As described above, bandwidth may be allocated via the "leaky bucket" method as applied to WFQ, but is also modified as described below.

Two-stage shaper 410 provides a method for fair allocation of bandwidth because the shaper takes into account the length of a packet when proportioning and assigning the bandwidth to the respective CoS. Two-stage shaper 410 may be used in conjunction with the "leaky bucket" method as a rate control method to control the traffic flow exiting a network 100.

FIG. 4 is a block diagram of a network including a network device supporting a service differentiation in accordance with an embodiment of the invention. Two-stage shaper 410 shapes the traffic flow of the packets as they are being transmitted from an egress port 202. Two-stage shaper 410 may include a first token and a second token bucket. The first token bucket may be referred to as committed information rate (CIR) bucket 420 and the second bucket may be referred to as peak information rate (PIR) bucket 430. Network 100 may be configured so that a two-stage shaper 410 is assigned to each CoS that arrives within the network 100.

MMU 205 may serve to monitor and regulate the packets accepted into network device 200. Thus, MMU 205 may ensure that the incoming packets are in compliance with the network device's SLA. WFQ shapers 410, shown in FIG. 2, may include token buckets 420 and 430 and generates token credits at a predetermined rate. WFQ shaper 410 may deposit the tokens into the respective token buckets at a predetermined interval. The predetermined rate at which the tokens are generated and the predetermined interval at which the tokens are deposited into the respective buckets may be established according to the SLA and entered by a programmer using CPU 210. Each token may serve as a permission ticket for a network device 200 to send a certain number of bits into the network. Thus, token buckets 420 and 430 are containers of tokens that are periodically added to the buckets by WFQ shaper at a certain rate. Both buckets may have a predetermined capacity as defined according to the SLA.

CIR bucket 120 and PIR bucket 130 may establish the rate of transfer of the packets at which the tokens are accumulated within network 100. A token bucket flow may be defined by the rate at which tokens are accumulated and the depth of the token pool in the bucket. The depth of the token pool is equivalent to the number of tokens in the bucket. According to the exemplary embodiment shown in FIG. 4, the number of tokens in CIR bucket 420 is indicated as NumCTok, and the number of tokens in PIR bucket 430 is indicated as NumPTok. The rate of transfer of the packets may depend on the parameters that profile the token buckets. Thus, in this embodiment, the rate of transfer parameters may include the committed information rate (CIR), the peak information rate (PIR), the peak burst size (PBS), and the committed burst size (CBS) per class of service. Accordingly, the profile of token buckets 420 and 430 may be configured to correspond to these parameters.

Thus, in the embodiment shown in FIG. 4, tokens may be added to CIR bucket 420 at the CIR, which is the average rate of packet transmission for a particular CoS. The CBS is the maximum number of bytes of data, which may be burst at the CIR so as to not create scheduling concerns. Tokens may be added to PIR bucket 430 at the PIR, which is the upper bound of the rate at which packets can be transmitted for each CoS. The PBS is the maximum number of bytes of data that can be burst at line rate when the packets are being burst at the PIR. Thus, the WFQ shapers may insert tokens into bucket 420 at the CIR and inserts tokens into bucket 430 at the PIR. Thus, the operating parameters of the invention may include two different burst sizes―CBS and PBS.

When a packet arrives at network device 200, WFQ shaper 410 may determine whether there are enough credits in the token bucket for the packet to be sent or whether that packet must be delayed or buffered. If there are a sufficient number of tokens available in the bucket, packets are assigned a number of tokens based upon the size or length of the packet. A number of tokens, which are equivalent to the byte size of the packet, are removed from the respective bucket by WFQ shaper 410. The amount of information equal to a token and the amount of tokens a user may be set by an ISP (Internet Service Provider) within a service level agreement (SLA). For example, a token may be considered to be 10Kbits of data. A user's network device may be set to 200 tokens/second, or 2 Mbits/second (Mbps). In another embodiment, one token may be programmed to equal one byte of data. When the packets received at network device 200 exceeds the programmed transfer rate limitations, these packets may be buffered by network device 200 in a memory device.

After, WFQ shaper 410 removes the approximate number of tokens, which corresponds to the length (L) of the packet, the packet is transmitted out of network 100. Thus, when traffic arrives at buckets 420 and 430 and there are sufficient tokens in the buckets, this means that the traffic conforms to the terms of the SLA.

WFQ shaper 410 replenishes the tokens of both buckets 420 and 430 at regular intervals depending on the CIR and the PIR, respectively. When WFQ shaper 410 generates the tokens and if the bucket is already full of tokens, incoming tokens may overflow the bucket. However, this overflow of surplus tokens will not be available as future packets. Thus, at any time, the largest burst a source network device can send into network 100 may be roughly proportional to the size of the bucket.

One shortcoming associated with conventional devices is the degradation of their QoS when multiple bursts arrive simultaneously at a network device so that multiple devices compete for the same input and/or output ports. When this situation occurs, long delays may occur within these conventional devices for each CoS or packets for each CoS may be dropped due to buffer overflow or congestion. Under these circumstances, a conventional device cannot guarantee the network's QoS.

To mitigate the problems associated with these conventional devices, according to one embodiment of the invention, WFQ shaper 410 may be a two-stage shaper 412, which is used to implement service differentiation and classify traffic according to granular network policies.

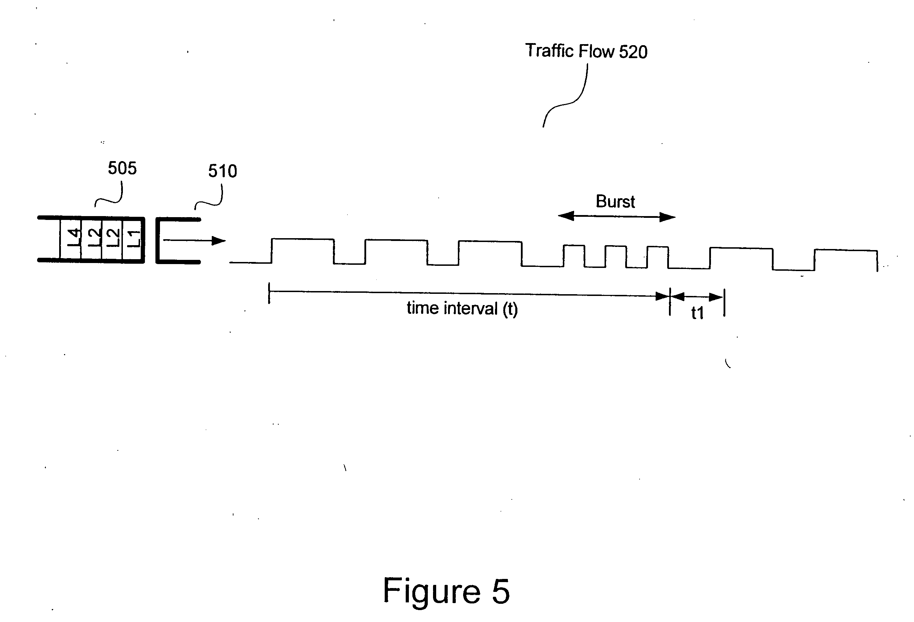

As shown in FIGS. 5-6, as the packets are placed in a transmission queue 505 of egress ports 510, two-stage shaper 412 shapes the traffic flow 520 as the packets exits the transmission ports 510 (P0-P7). According to this embodiment, shaping may be performed per CoS. Specifically, network device 200 may implement the WFQ shaper to shape the egress traffic according to the user's specified parameters. In this example, the specified parameters are defined as the CIR, PIR, PBS and CBS per CoS. Namely, network device 200 shapes a CoS queue of packets by controlling the CIR, CBS, PIR, and PBS for the CoS. The shaping may be performed at byte granularity.

When packets arrive at the network device 200 having a transfer rate of the CIR or less, the invention may be configured so that CIR bucket 420 regulates and shapes the traffic flow. As shown in FIGS. 2 and 4, upon the packet's arrival, MMU 205 may inspect the header of the packet to determine the CoS of the packet. Then, based upon the CoS, MMU 205 may determine the appropriate flow control parameters to apply to the packet. WFQ shaper 410 will then inspect the length L of the packet and determine whether the length L of the packet is less the number of tokens in CIR bucket 420. Namely, WFQ shaper 410 determines if the length L of the packet is less than NumCTok. If the length L is less than NumCTok, this means that there are enough tokens in CIR bucket 420 to transmit the packet. If so, the WFQ shaper 410 will then decrement the tokens in CIR bucket 420 by the length of the packet. In FIG. 5, packets are shown in transmission queue 505 as having lengths L1, L2, L3 and L4.

If the packets arrive at network device 200 at a rate at CIR or less and there is not a sufficient amount of tokens in CIR bucket 420, the incoming packet must wait until a sufficient number of tokens are added to CIR bucket 420 by WFQ shaper 410. When there is not a sufficient amount of tokens available, two-stage shaper 410 may delay or buffer the packets in memory or buffer (not shown) until a sufficient number of tokens have been added to CIR bucket 420 in order to regulate of the traffic by shaping the traffic flow 510 as the packets exit port 510. MMU 205 may store the packets in memory or buffer (not shown) and schedule them for transmission at a later time. When the packet is delayed by buffering or temporarily storing the packet in memory or buffer, network device 200 may use a weighted fair queue to hold and prioritize the transmission of the delayed traffic.

Meanwhile, network device advances to the next CoS queue, and the process may begin again for the first packet queued in the egress port for this CoS. As discussed above, the invention may be configured to provide a two-stage shaper per CoS queue.

When the packets are arriving at network device 200 at a rate less than or equal to CIR, network device 200 may be configured so that only CIR bucket 420 regulates and shapes the traffic flow, as discussed above. However, if the packets start arriving at a faster approaching PIR, then the scheduling of the transmission of the packets may take into account the parameters assigned to PIR bucket 430. Thus, network 100 may be configured so that both the CIR bucket 420 and PIR bucket 430 regulates and shapes the traffic flow at rates higher than CIR. The invention may employ both buckets so that, in order to send packets having a transmission rate grater than CIR, the transmission rate may not exceed both CIR and PIR at any one time. Thus, in the preferred embodiment, the rate of the packet may need to comply with the parameters of both the CIR bucket 420 and the PIR bucket 430 in order for the packet to be sent out.

Thus, in implementing the features of two-shaper shaper 412, the invention may be configured by a programmer using a CPU or a processor to operate according to several assumptions. One assumption is that the PIR may be greater than the CIR. Thus, PIR bucket 430 may receive packets at a faster rate than CIR bucket 420. The invention may also be configured so that the CBS may be programmed to be greater than the PBS. Another assumption, which may be preprogrammed in into the CPU, is that the PBS may be greater than the maximum size packet of the CoS.

In addition, these assumptions work in conjunction with the transfer rate parameters so that PIR bucket 430 may serve to regulate and control the transmissions of the packets transmitted out of the network device 200 and to limit the amount of tokens removed from CIR bucket 420 as discussed below.

Token buckets 420 and 430 may operate so that when a packet arrives at a rate greater than CIR, MMU 205 may inspect the header to determine the CoS. Then, WFQ shaper 410 determines the length L of the packet and calculates whether the length of the packet is less than both NumCTok and NumPTok based upon the CoS. If so, this means that there are enough tokens available in both buckets 420 and 430 to satisfy the transfer rate parameters of both buckets. The number of tokens in the CIR and PIR buckets may be decremented by the length of the packet. Thus, network device 200 may remove the tokens from both token buckets 420 and 430, forward the packet out onto the network, and recalculate both NumCTok and NumPTok by subtracting the length of the packet from the number of packets contained in the respective buckets. Network device 200 may then advance to the next CoS.

If too many packets arrive over a period of time, the CIR buckets 420 and PIR buckets 430 may eventually become empty. If a sufficient amount of tokens is not immediately available when a packet arrives, the network device 200 may buffer the packet in a memory or buffer (not shown). Whenever the packets arrive at a rate greater than CIR and if the length L of the packet is greater than the number of packets in either CIR bucket 420 or PIR bucket 430, then MMU 205 may delay or buffer the packet. In other words, if the length L of the packet is greater than either NumCTok or NumPTok (FIG. 4), MMU 205 may buffer the packet until a sufficient number of tokens have been added to both buckets. While WFQ shaper 410 replenishes either or both buckets according to the predetermined time interval, the next CoS queue may be processed by network device 200.

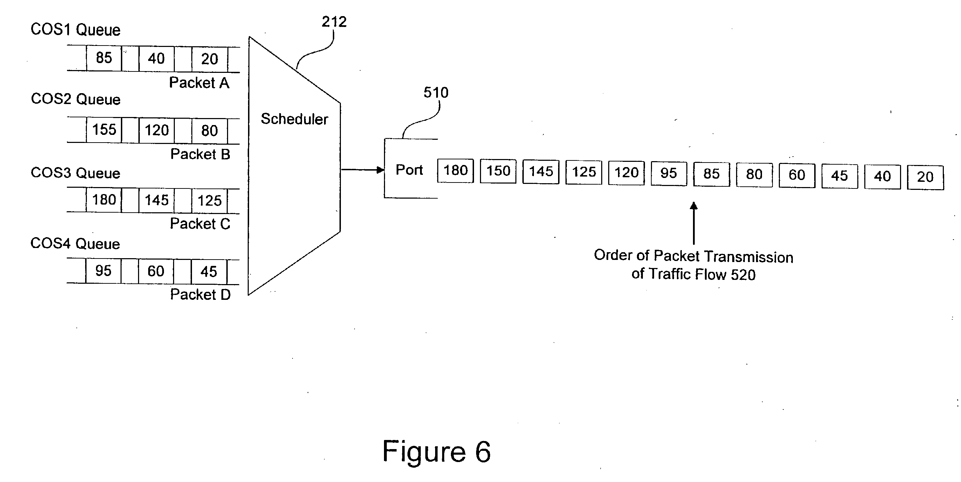

PIR bucket 430 may serve to prevent CIR bucket 420 from depleting all of its tokens on large-sized packets. Network device 200 may employ PIR bucket 430 to limit the rate at which CIR bucket 420 transmits large packets. Thus, when the tokens in PIR bucket 430 are exhausted, network device 200 may stop the transmissions of these packets and place these large packets in a queue in memory or buffer for a time (t1) (FIG. 5) until the tokens have been replenished in PIR bucket 430 by WFQ shaper 410. Accordingly, as shown in FIG. 6, the WFQ algorithm, which may be carried out by CPU 210, may support variable-length packets so that traffic flows having larger packets are not allocated more bandwidth than traffic flows having smaller packets. The WFQ algorithm may also support traffic flows having different bandwidth requirements by giving each CoS queue a weight that assigns a different percentage of output port bandwidth.

As shown in FIG. 6, based upon the lengths of the packets aligned in each CoS queue and the determination of whether there are sufficient tokens in the respective buckets to transmit the packets, the WFQ algorithm calculates and schedules the transmission of the packets from the egress port 510. When each packet is classified and placed into its respective CoS transmission queue, a scheduler 212 schedules the packets for transmission out of network device 200. As scheduler 212 services the CoS queues, scheduler 212 selects the packet with the smallest length as the next packet for transmission on the output port. Thus, the weighting of the CoS queues may allow scheduler 212 to transmit two or more consecutive packets from the same CoS queue, as shown in the order of the packet transmission of the traffic flow 520 in FIG. 6.

Thus, two-stage shaper 410 arranges and transmits the packets according to the SLA and ensures that one or more network devices do not dominate the bandwidth, to the exclusion of others. The invention also ensures that a packet or a network device adheres to the terms stipulated in a SLA and determines the QoS to render to the packet.

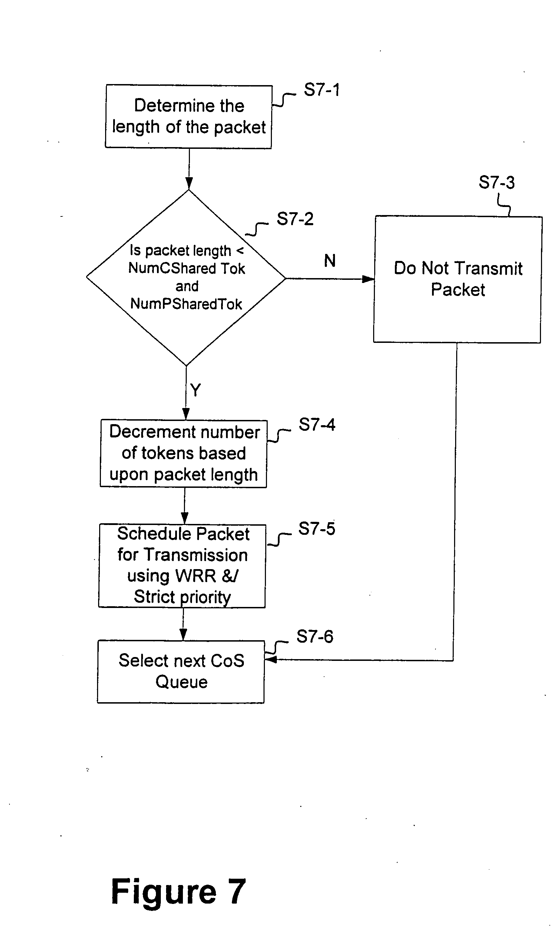

FIG. 7 is a flow chart of a method for service differentiation according to an embodiment of the invention. At step S7-1, a packet is received at a device performing rate control, such as a network device described above. The length of the packet is determined.

Next, at step S7-2, the WFQ shaper determined whether the length of the packet is less than the number of tokens in the CIR bucket, NumCTok.

If in step S7-2 the length of the packet is less than the number of tokens, the system assigns the number of tokens to the packet based upon the packet length L in step S7-4 and schedules the packet for transmission according to its priority as established by the WFQ algorithm in step S7-5. In step S7-6, the device then advances to the next CoS.

In step S7-2, if the length of the packet is not less than the number of tokens, this means that there is not a significant amount of tokens in the CIR bucket to transmit the packet. Thus, the packet may be buffered or temporarily stored in a buffer until a sufficient amount of tokens have been added to the CIR bucket by the token bucket controller until in step S7-3. When there is not enough tokens available, the device may use a weighted fair queue to hold and prioritize the transmission of the delayed packet in Step S7-3.

One having ordinary skill in the art will readily understand that the steps of the method may be performed in different order, or with multiple steps in parallel with one another. Also, one having ordinary skill in the art will understand that a network device may be configured to perform the above-described method either in silicon, discrete components, software, or a combination of hardware and software. Accordingly, one will understand that the switching configurations described herein are merely exemplary. Accordingly, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

## Claims

1. A network device comprising:
a port configured to send and receive a packet, wherein the port is connected to a network entity;
a buffer configured to store the packet;
a flow control module configured to control transmission of the packet within the network device; and
a service differentiation module coupled with the buffer and the flow control module, said service differentiation module being configured to regulate storage of the packet in the buffer and to regulate transmission of the packet from the network device to the network entity,
wherein said service differentiation module is configured to regulate the transmission of the packet based upon whether a size of the packet satisfies operating parameters defined by the network device and the network entity.

2. The network device as recited in claim 1, wherein the service differentiation module comprises a two-stage egress scheduler configured to regulate and shape a traffic flow; and
wherein the packet travels in the traffic flow during the transmission of the packet from the port of the network device to the network entity.

3. The network device as recited in claim 2, wherein the two-stage egress scheduler comprises a first token bucket containing a number of first tokens and a second token bucket containing a number of second tokens.

4. The network device as recited in claim 3, wherein the transmission of the packet from the network device occurs if a transfer rate of the packet is within operating parameters assigned to said first token bucket and a length of the packet is less than the number of first tokens contained in said first token bucket.

5. The network device as recited in claim 4, wherein the operating parameters of the first token bucket comprises an average rate of packet transmissions for a class of service, and a maximum number of bytes configured to be burst at the average rate.

6. The network device as recited in claim 5, wherein said the transmission of the packet from the network device to the network entity occurs if a transfer rate of the packet is greater than a transfer rate assigned to said first token bucket and a length of the packet is less than the number of first tokens contained in said first token bucket and the number of second tokens contained in said second token bucket.

7. The network device as recited in claim 6, wherein said second token bucket is configured to control the transmission of a large-sized packet by regulating a removal of the number of first tokens from said first token bucket.

8. The network device as recited in claim 2, wherein the two-stage egress scheduler is configured to shaped the traffic flow according to said operating parameters; and
wherein said operating parameters comprise an average rate of packet transmission for a class of service (CIR), a maximum number of bytes of the packet configured to be burst at the average rate (CBS), an upper bound rate at which the packet can be transmitted based upon the class of service (PIR) and a maximum number of bytes of the packet that can be burst when the packet is being burst at the upper bound rate (PBS).

9. The network device as recited in claim 8, wherein the operating parameters for the first token bucket comprise the average rate of packet transmission for a class of service (CIR), a maximum number of bytes of the packet configured to be burst at the average rate (CBS); and
wherein the operating parameters for the second token bucket comprises an upper bound rate at which the packet can be transmitted based upon the class of service (PIR) and a maximum number of bytes of the packet that can be burst when the packet is being burst at the upper bound rate (PBS).

10. A method of flow control in a network device, said method comprising:
providing a port configuration to receive and transfer a packet;
determining a classification of said packet;
determining operating parameters for transmitting said packet from said network device based upon said classification;
providing a first shaper and a second shaper for regulating a traffic flow, wherein said second shaper imposes a threshold limit on said first shaper, wherein said threshold limit regulates said first shaper; and
scheduling said packet for transmission from said port to a network entity.

11. The method as recited in claim 10 wherein the step of scheduling shapes the traffic flow, wherein the packet travels in the traffic flow during the transmission of the packet from the port of the network device.

12. The method as recited in claim 11 further comprising a step of:
providing a first token bucket containing a number of first tokens; and
providing a second token bucket containing a number of second tokens.

13. The method of recited in claim 12 further comprising the steps of:
determining a transfer rate of the packet;
determining a length of the packet;
determining the number of tokens contained in the first token bucket;
determining operating parameters assigned to said first token bucket; and
transmitting said packet from said network device to said network entity when the transfer rate of the packet is less than operating parameters assigned to said first token bucket and when the length of the packet is less than the number of first tokens contained in said first token bucket.

14. The method as recited in claim 13 further comprising the steps of:
determining the number of packets contained in the second token bucket;
determining operating parameters assigned to said second token bucket; and
transmitting said packet from said network device to said network entity when the transfer rate of the packet is greater than a transfer rate assigned to said first token bucket and when the length of the packet is less than the number of first tokens contained in said first token bucket and the number of second tokens contained in the second token bucket.

15. The method as recited in claim 12 further comprising the steps of:
controlling said second token bucket to control the transmission of a large-sized packet; and
regulating said second token bucket to regulate a removal of the number of first tokens from said first token bucket.

16. A network device comprising:
a port configured to send and receive a packet, wherein the port is connected to a network entity;
a storage means for storing the packet;
a flow control means for controlling transmission of the packet within the network device; and
a service differentiation means coupled with the storage and the flow control means, said service differentiation means for regulating storage of the packet in the storage means and for regulating transmission of the packet from the network device to the network entity,
wherein said service differentiation means is configured to regulate the transmission of the packet based upon whether a size of the packet satisfies operating parameters defined by the network device and the network entity.

17. The network device as recited in claim 16, wherein the service differentiation means comprises a two-stage egress scheduling means for regulating and shaping a traffic flow; and
wherein the packet travels in the traffic flow during the transmission of the packet from the port of the network device to the network entity.

18. The network device as recited in claim 17, wherein the two-stage egress scheduling means comprises a first token storage means containing a number of first tokens and a second token storage means containing a number of second tokens.

19. The network device as recited in claim 18, wherein the transmission of the packet from the network device occurs if a transfer rate of the packet is within operating parameters assigned to said first token storage means and a length of the packet is less than the number of first tokens contained in said first token storage means.

20. The network device as recited in claim 19, wherein said the transmission of the packet from the network device to the network entity occurs if a transfer rate of the packet is greater than a transfer rate assigned to said first token storage means and a length of the packet is less than the number of first tokens contained in said first token storage means and the number of second tokens contained in said second token storage means.

21. The network device as recited in claim 20, wherein said second token storage means is configured to regulate the transmission of a large-sized packet by regulating a removal of the number of first tokens from said first token bucket.

22. The network device as recited in claim 1, wherein the network device comprises a switch.

23. The network device as recited in claim 1, wherein the network device comprises a router.

24. The network device as recited in claim 1, wherein the network device comprises a hub.

25. The network device as recited in claim 2, wherein the shaping is performed at byte granularity level.

26. A network device comprising:
a port configured to send and receive a packet, wherein the port is connected to a network entity;
a buffer configured to store the packet;
a flow control module configured to control transmission of the packet within the network device;
a service differentiation module coupled with the buffer and the flow control module, said service differentiation module being configured to regulate storage of the packets in the buffer and to regulate transmission of the packet from the network device to the network entity based upon a number of tokens contained in the service differentiation module,
wherein said service differentiation module is configured transmit said packet from said network device when a size of said packet satisfies the operating parameters of the network device and the network entity,
wherein said service differentiation module is configured to store said packet in said buffer when said packet does not satisfy the operating parameters of the network device and the network entity; and
a token generator controller connected to said flow control module and said service differentiation module, said token generator controller being configured to replenish the number of packets contained in said service differentiation module.
